# EUROPÄISCHE PATENTSCHRIFT

(11) **EP 2 048 038 B1**
(45) Veröffentlichungstag und Bekanntmachung des Hinweises auf die Patenterteilung: **12.05.2010**
(21) Anmeldenummer: 07291246.2
(22) Anmeldetag: 11.10.2007
(51) Int. Cl.: B60R 16/027, H01R 35/02

(54) **Vorrichtung zur Signal-bzw. Stromübertragung zwischen relativ zueinander bewegbaren Endstellen**
Device for signal and current transmission between terminals moveable in relation to each other
Dispositif de transmission de courant ou de signal entre des terminaux se déplaçant les uns par rapport aux autres

(43) Veröffentlichungstag der Anmeldung: 15.04.2009
(73) Patentinhaber: Nexans, 75008 Paris (FR)
(72) Erfinder: Schröer, Frank, Dipl.-Ing., 92637 Weiden (DE)
(74) Vertreter: Döring, Roger

(56) Entgegenhaltungen:
- EP-A- 1 232 914
- JP-A- 10 162 921
- US-A- 5 685 728

## Beschreibung

Die Erfindung bezieht sich auf eine Vorrichtung zur Signal- bzw. Stromübertragung zwischen relativ zueinander bewegbaren Endstellen, zwischen denen mindestens eine in Windungen verlaufende Flachband-Leitung angeordnet ist, welche mindestens zwei parallel und mit Abstand zueinander in eine Umhüllung aus Isoliermaterial eingebettete elektrische Leiter aufweist und in einen inneren Wickelbereich sowie einen mit demselben durch eine U-förmige Umkehrstelle verbundenen, äußeren Wickelbereich mit jeweils unterschiedlicher Wickelrichtung aufgeteilt ist und welche in einer im wesentlichen kreisförmigen Kassette untergebracht ist, bei welcher die Kassette aus einem um ihre Achse drehbaren, mindestens eine der Endstellen tragenden Rotor und einem feststehenden, ebenfalls mindestens eine der Endstellen tragenden Stator besteht, die einen ringförmigen Wickelraum zur Aufnahme der Flachband-Leitung zwischen sich einschließen, wobei einer der Wickelbereiche im Bereich des Rotors und der andere im Bereich des Stators angeordnet ist (EP 0 556 779 B1).

Eine derartige Vorrichtung wird beispielsweise zur Stromzuführung und/oder Signalzuführung an bewegliche Teile eines Kraftfahrzeugs benötigt. Sie kann dazu beispielsweise im Lenkrad eines Kraftfahrzeugs, aber auch an anderer Stelle eingesetzt werden, wie beispielsweise in einem Lenkgetriebe. Die wesentliche Aufgabe dieser Vorrichtung ist die Übertragung von Strom und/oder Signalen zwischen feststehenden und beweglichen Teilen, ohne den Einsatz von schleifenden Kontakten.

Bei der bekannten Vorrichtung nach der EP 0 735 632 B1 ist die gewickelte Flachband-Leitung - im folgenden kurz "FBL" genannt - in einen inneren und einen äußeren Wickelbereich aufgeteilt. In den beiden Wickelbereichen haben die Windungen unterschiedliche Wickelrichtungen. Die beiden Wickelbereiche der hier als Flachleiter-Bandleitung ausgeführten FBL sind durch eine etwa U-förmige Umkehrstelle miteinander verbunden. Zwischen den beiden Wickelbereichen liegt ein die Umkehrstelle durchlassender, ringförmiger Führungskörper, der in Umfangsrichtung der Kassette bewegbar ist. Er wird durch die gewickelte FBL bzw. durch deren Umkehrstelle bewegt, wenn der Rotor der Kassette gedreht wird. Der Führungskörper dient einerseits der Führung der FBL beim Auf- und Abwickeln der Wickelbereiche und andererseits als Abstandshalter zwischen den beiden Wickelbereichen, damit deren Windungen nicht zusammenfallen.

Die eingangs beschriebene Vorrichtung nach der EP 0 556 779 B1 arbeitet ohne Führungskörper für die Wickelbereiche der FBL. In der Kassette dieser Vorrichtung sind statt dessen beispielsweise vier FBLen angeordnet, von denen jede zwei durch eine U-förmige Umkehrstelle verbundene Wickelbereiche aufweist. Dabei liegt jede FBL in den Wickelbereichen mit einer größeren Länge einerseits am Rotor und andererseits am Stator der Kassette an. Jede FBL ist an ihren Enden mit einer am Rotor und einer am Stator angebrachten Endstelle verbunden. Die Endstellen und damit auch die FBLen sind in Umfangsrichtung der Kassette versetzt. Die FBLen stützen sich dadurch gegenseitig derart ab, daß ihre Windungen auch ohne gesonderten Stützkörper nicht zusammenfallen können. Die Montage von vier FBLen ist technisch und materiell aufwendig, insbesondere dann, wenn für bestimmte Anwendungen für die Übertragung von Strom und/oder Signalen weniger als vier FBLen benötigt werden.

Die Weitere EP 1 232 914 A zeigt dem Oberbegriff des Anspruchs 1.

Der Erfindung liegt die Aufgabe zugrunde, die eingangs geschilderte Vorrichtung so zu gestalten, daß auch eine verminderte Anzahl von im Wickelraum der Kassette angeordneten FBLen, bis hin zu nur einer FBL, ausreichend stabilisiert ist.

Diese Aufgabe wird gemäß der Erfindung dadurch gelöst, daß das Band in seinem Verlauf um an Stator und/oder Rotor der Kassette angebrachte Wendepunkte herumgelegt ist, von denen jeweils die Windungen von Wickelbereichen von zwei unterschiedlichen Abschnitten des Bandes mit entgegengesetztem Verlauf ausgehen, und das mit seinen Enden am Stator und/oder am Rotor festgelegt ist.

Das in dieser Vorrichtung neben mindestens einer FBL eingesetzte Band hat mindestens zwei Abschnitte mit in Umfangsrichtung der Kassette versetzten Umkehrstellen und zugehörigen Wickelbereichen mit unterschiedlichen Wickelrichtungen. Es ist dadurch selbst ausreichend stabil, so daß seine Windungen in den unterschiedlichen Wickelbereichen nicht zusammenfallen können. Durch das Band ist sichergestellt, daß die im Wickelraum der Kassette vorhandenen FBLen, die in Umfangsrichtung der Kassette versetzt sind, ebenfalls ausreichend stabilisiert sind. Das gilt insbesondere auch dann, wenn in der Kassette nur eine FBL eingesetzt ist. In diesem Fall hat das Band vorzugsweise drei oder mit besonderem Vorteil vier in Umfangsrichtung der Kassette versetzte Abschnitte mit Umkehrstellen und zugehörigen Wickelbereichen. In allen möglichen Ausführungsbeispielen wird unabhängig von der Anzahl der im Wickelraum der Kassette vorhandenen FBLen nur ein einziges Band eingesetzt, das mindestens zwei Abschnitte mit Umkehrstellen aufweist, die in den Wendepunkten ineinander übergehen.

Das in dieser Vorrichtung eingesetzte Band hat in bevorzugter Ausführungsform eine geradzahlige Anzahl von Abschnitten mit Umkehrstellen. Das führt zu einer vereinfachten Montage des Bandes in der Kassette, weil dessen Enden dann nur entweder am Rotor oder nur am Stator derselben festgelegt sind.

Ausführungsbeispiele des Erfindungsgegenstandes sind in den Zeichnungen dargestellt.

Es zeigen:
Fig. 1 eine Ansicht einer Kassette für eine Vorrichtung zur Signal- bzw. Stromübertragung mit zwei Endstellen in schematischer Darstellung.
Fig. 2 und 3 zwei unterschiedliche Ausführungsformen einer in der Vorrichtung nach der Erfindung verwendbaren Kassette ebenfalls in schematischer Darstellung.

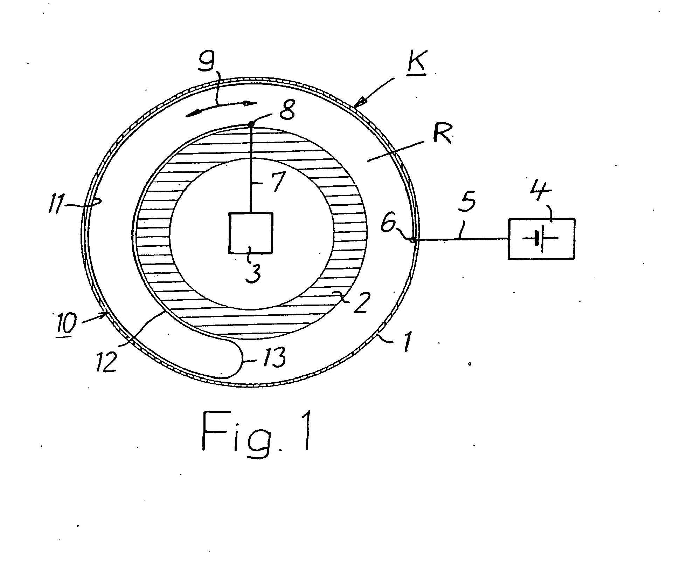

Aufbau und Anordnung einer Vorrichtung mit einer beispielsweise im Lenkrad eines Fahrzeugs zu montierenden Vorrichtung mit Kassette sind grundsätzlich bekannt und beispielsweise in den eingangs erwähnten Schriften beschrieben. Auf entsprechende Einzelheiten wird deshalb hier nicht weiter eingegangen. Statt des Wortes "Vorrichtung" wird im folgenden der Einfachheit halber das Wort "Kassette" verwendet. Fig. 1 dient nur zur grundsätzlichen Erläuterung der Funktionsweise der Kassette.

In Fig. 1 sind schematisch zwei beispielsweise kreisförmig ausgebildete, konzentrisch angeordnete Wände 1 und 2 einer Kassette K dargestellt. Die Wand 1 gehört beispielsweise zum Stator der Kassette K, während die Wand 2 zu deren Rotor gehört. Die Kassette K ist für den Einbau in das Lenkrad eines Kraftfahrzeugs bestimmt. Zur Stromversorgung einer Elektronik 3, durch deren Signal ein Airbag ausgelöst werden kann, ist die Kassette K an eine Spannungsquelle 4 des Kraftfahrzeugs angeschlossen. Die Spannungsquelle 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Zwischen den beiden Endstellen 6 und 8 ist in einem durch die Wände 1 und 2 begrenzten Wickelraum R eine FBL 10 mit mindestens zwei elektrischen Leitern angebracht. Die FBL 10 ist in bevorzugter Ausführungsform als Flachleiter-Bandleitung mit flachen bzw. rechteckigen Leitern ausgeführt. Eine solche Leitung ist insgesamt relativ dünn und nimmt auch dann wenig Platz ein, wenn sie in mehreren, nebeneinander liegenden Windungen verläuft.

Die FBL 10 ist gemäß Fig. 1 in der Kassette K in Windungen angeordnet, die in einen äußeren Wickelbereich 11 und einen inneren Wickelbereich 12 aufgeteilt sind. Sie umfassen in einer aus Fig. 1 ersichtlichen Mittelstellung bzw. in der Montageposition der Kassette K jeweils mindestens eine Windung. In den beiden Wickelbereichen 11 und 12 haben die Windungen der FBL 10 entgegengesetzte Wickelrichtungen. Sie liegen einerseits am Stator (Wand 1) und andererseits am Rotor (Wand 2) der Kassette K an. Die Wickelbereiche 11 und 12 sind durch eine etwa U-förmig ausgeführte Umkehrstelle 13 der FBL 10 miteinander verbunden.

Bei einer Drehung des Lenkrads eines Fahrzeugs, in welches die Kassette K angebaut ist, wird deren Rotor in Richtung des Doppelpfeiles 9 mitgedreht. Der Rotor nimmt über die Endstelle 8 die angeschlossene FBL 10 mit, so daß deren Umkehrstelle 13 in Umfangsrichtung der Kassette K hin und her wandert.

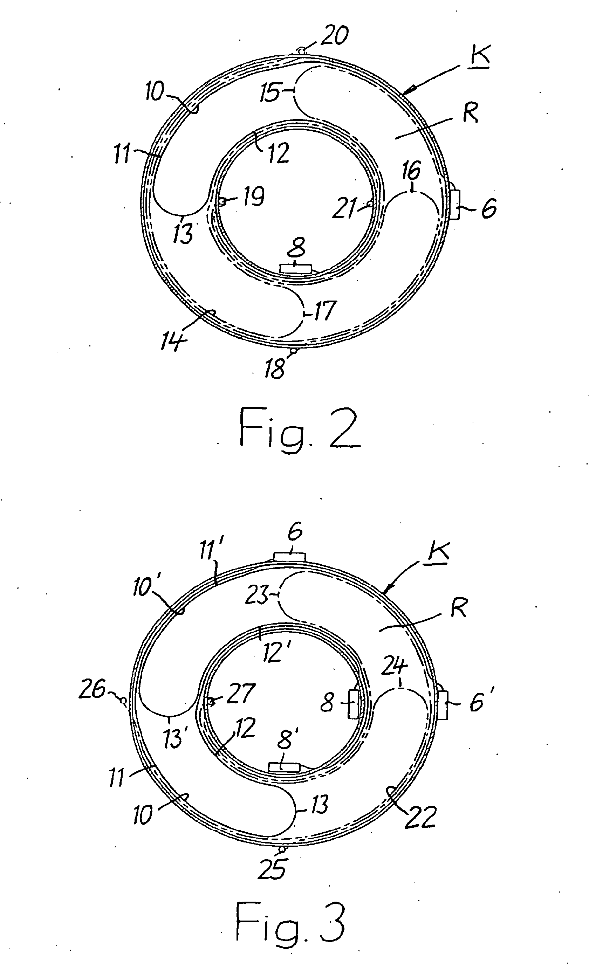

Um zu verhindern, daß die Windungen der FBL 10 in den Wickelbereichen 11 und 12 zusammenfallen bzw. aufeinander zu fallen, ist gemäß Fig. 2 im Wickelraum R zusätzlich ein Band 14 aus Isoliermaterial angeordnet, das ebenfalls in Windungen verläuft, allerdings mit mehr Windungen als die FBL 10 und mit dauernd wechselnder Wickelrichtung. Zur besseren Unterscheidung von FBL 10 und Band 14 ist das Band 14 als unterbrochene bzw. gestrichelte Linie dargestellt.

Das Band 14 besteht beispielsweise aus Polyester oder Polyethylentherephthalat. Es hat mit Vorteil die gleiche Höhe bzw. Breite wie die FBL 10. Das Band 14 hat gemäß Fig. 2 drei in Umfangsrichtung der Kassette K versetzte Abschnitte mit Umkehrstellen 15, 16 und 17 und daran anschließenden Wickelbereichen mit unterschiedlichen Wickelrichtungen. Die drei Abschnitte des Bandes 14 stützen sich gegenseitig und auch die FBL 10. Ein Zusammenfallen der jeweiligen Windungen in den unterschiedlichen Wickelbreichen ist dadurch ausgeschlossen.

Das Band 14 ist einteilig. Es durchläuft zwischen seinen beiden Enden die drei Abschnitte mit Wickelbereichen und Umkehrstellen 15, 16 und 17. Dazu ist das Band 14 beispielsweise mit seinem einen Ende an der Stelle 18 an der Wand 1 festgelegt. Es liegt dann bis zur Umkehrstelle 15 im Bereich der Wand 1 und wird von dort mit gegenläufiger Wickelrichtung bis zu einem an der Wand 2 angebrachten Wendepunkt 19 in deren Bereich geführt. Vom Wendepunkt 19 aus verläuft das Band 14 mit erneut geänderter Wickelrichtung im Bereich der Wand 2 bis zur Umkehrstelle 16, von wo aus es im Bereich der Wand 1 mit wieder geänderter Wickelrichtung bis zu einem an der Wand 1 angebrachten Wendepunkt 20 geführt ist. Vom Wendepunkt 20 verläuft das Band 14 mit wieder entgegengerichteter Wickelrichtung im Bereich der Wand 1 bis zur Umkehrstelle 17. Von dort aus wird das Band 14 im Bereich der Wand 2 bis zu einer Stelle 21 geführt, an welcher es mit seinem anderen Ende an der Wand 2 festgelegt ist.

Die Kassette K gemäß Fig. 3 ist mit zwei FBLen 10 und 10' ausgerüstet, die an Endstellen 6 und 6' einerseits sowie 8 und 8' andererseits angeschlossen sind. Sie haben analog zu den Fig. 1 und 2 jeweils zwei Wickelbereiche 11 und 1 1 ' sowie 12 und 12' sowie jeweils eine U-förmige Umkehrstelle 13 bzw. 13'. Bei dieser Ausführungsform der Kassette K ist ein wieder gestrichelt eingezeichnetes Band 22 mit zwei in Umfangsrichtung der Kassette K versetzten Abschnitten eingesetzt, deren Wickelbereiche Umkehrstellen 23 und 24 aufweisen. Das Band 22 ist mit einem Ende an einer Stelle 25 und mit seinem anderen Ende an einer Stelle 26 jeweils an der Wand 1 festgelegt. Es durchläuftanalog zu Fig. 2 - mit entsprechenden Wickelbereichen mit wechselnden Wickelrichtungen - ausgehend von der Stelle 25 als Festpunkt die Umkehrstelle 23, einen Wendepunkt 27 und die Umkehrstelle 24 und ist an der Stelle 26 festgelegt.

Diese Ausführungsform der Kassette K bzw. des Bandes 22 mit zwei Umkehrstellen 23 und 24 hat den Vorteil, daß das Band 22 mit beiden Enden an der gleichen Wand, hier der Wand 1, der Kassette K festgelegt ist. Diese bevorzugte Ausführungsform des Bandes 22 wird auch dann eingesetzt, wenn mehr als zwei FBLen in einer Kassette K vorhanden sind.

In bevorzugter Ausführungsform hat das Band 14 bzw. 22 in allen möglichen Aufbauten der Kassette K eine geradzahlige Anzahl von Abschnitten mit Umkehrstellen, so daß seine Enden entweder beide an der Wand 1 oder beide an der Wand 2 befestigt sind. Bei einer Kassette K nach Fig. 2 mit nur einer FBL 10 wird also - in Abweichung von der zeichnerischen Darstellung - mit Vorteil ein Band 14 eingesetzt, das vier Abschnitte mit Umkehrstellen, drei Wendepunkte und zwei Befestigungsstellen aufweist, an denen seine Enden festgelegt sind. Die Befestigungsstellen befinden sich mit Vorteil an der außen liegenden Wand 1.

## Patentansprüche

1. Vorrichtung zur Signal- bzw. Stromübertragung zwischen relativ zueinander bewegbaren Endstellen, zwischen denen mindestens eine in Windungen verlaufende Flachband-Leitung angeordnet ist, welche mindestens zwei parallel und mit Abstand zueinander in eine Umhüllung aus Isoliermaterial eingebettete elektrische Leiter aufweist und in einen inneren Wickelbereich sowie einen mit demselben durch eine etwa U-förmige Umkehrstelle verbundenen, äußeren Wickelbereich mit jeweils unterschiedlicher Wickelrichtung aufgeteilt ist, und welche in einer im wesentlichen kreisförmigen Kassette untergebracht ist, bei welcher die Kassette aus einem um ihre Achse drehbaren, mindestens eine der Endstellen tragenden Rotor und einem feststehenden, ebenfalls mindestens eine der Endstellen tragenden Stator besteht, die einen ringförmigen Wickelraum zur Aufnahme der Flachband-Leitung zwischen sich einschließen, wobei einer der Wickelbereiche im Bereich des Rotors und der andere im Bereich des Stators angeordnet ist, wobei in dem Wickelraum (R) der Kassette (K) außer der mindestens einen Flachband-Leitung (10) ein in Windungen verlaufendes Band (14,22) aus Isoliermaterial angeordnet ist, das in seinem Verlauf mindestens zwei in Umfangsrichtung der Kassette (K) gegeneinander versetzte Abschnitte mit Umkehrstellen und zugehörigen Wickelbereichen mit unterschiedlicher Wickelrichtung aufweist, **dadurch gekennzeichnet, daß** das Band (14,22) in seinem Verlauf um an Stator und/oder Rotor der Kassette (K) angebrachte Wendepunkte herumgelegt ist, von denen jeweils die Windungen von Wickelbereichen von zwei unterschiedlichen Abschnitten des Bandes (14,22) mit entgegengesetztem Verlauf ausgehen, und das mit seinen Enden am Stator und/oder am Rotor festgelegt ist.

2. Vorrichtung nach Anspruch 1, **dadurch gekennzeichnet, daß** beide Enden des Bandes (14,22) am Rotor der Kassette (K) festgelegt sind.

3. Vorrichtung nach Anspruch 1, **dadurch gekennzeichnet, daß** beide Enden des Bandes (14,22) am Stator der Kassette (K) festgelegt sind.

4. Vorrichtung nach einem der Ansprüche 1 bis 3, **dadurch gekennzeichnet, daß** das Band (14,22) eine geradzahlige Anzahl von Abschnitten mit Umkehrstellen hat und mit seinen beiden Enden entweder am Rotor oder am Stator der Kassette (K) festgelegt ist.

## Claims

1. Apparatus for signal and current transmission between end points which can move relative to one another, between which at least one flat ribbon line, which runs in turns, is arranged, which flat ribbon line has at least two electrical conductors, which are embedded in parallel and at a distance from one another in an insulation sheath, and which flat-ribbon line is subdivided into an inner winding area and an outer winding area, which are connected by means of an approximately U-shaped reversal point, with each winding area having a different winding direction, and which flat ribbon line is positioned in an essentially circular cassette, which comprises a rotor, which can rotate about its axis and is fitted with at least one of the end points, and a stationary stator, which is likewise fitted with at least one of the end points, which rotor and stator enclose between them an annular winding chamber for mounting of the flat ribbon line, and with one of the winding areas being arranged in the area of the rotor and the other being arranged in the area of the stator, wherein in addition to the at least one flat-ribbon line (10) a strip (14,22) of insulating material is arranged in the winding area (R) of the cassette (K), which runs in turns and which in its run has at least two sections which are offset with respect to one another in the circumferential direction of the cassette (K) and have reversal points and corresponding winding areas with a different winding direction, **characterized in that** the strip (14,22) in its run is formed around turning points, which are fitted to the stator and/or rotor of the cassette (K) and from each of which the turns of winding areas of two different sections of the strip (14, 22) with an opposite profile originate, and which strip (14, 22) is fixed at its ends on the stator and/or on the rotor.

2. Apparatus according to claim 1, **characterized in that** both ends of the strip (14,22) are fixed on the rotor of the cassette (K).

3. Apparatus according to claim 1, **characterized in that** both ends of the strip (14,22) are fixed on the stator of the cassette (K).

4. Apparatus according to one of the claims 1 to 3, **characterized in that** the strip (14, 22) has an even number of sections with reversal points and is fixed at both of its ends either on the rotor or on the stator of the cassette (K).

## Revendications

1. Dispositif de transmission de signal ou de courant entre des points d'extrémité mobiles l'un par rapport à l'autre, entre lesquels est disposé au moins un câble plat qui s'étend en spires, lequel présente au moins deux conducteurs électriques parallèles et espacés l'un de l'autre enrobés dans une enveloppe en matériau isolant et lequel est divisé en une zone d'enroulement intérieure ainsi qu'en une zone d'enroulement extérieure reliée avec celle-ci par un point d'inversion de sens à peu près en forme de U, ayant chacune un sens d'enroulement différent, et lequel est logé dans une cassette de forme essentiellement circulaire, la cassette étant constituée d'un rotor qui supporte au moins l'un des points d'extrémité et qui peut tourner autour de son axe et d'un stator fixe qui supporte lui aussi au moins l'un des points d'extrémité, lesquels incluent entre eux un espace d'enroulement de forme annulaire destiné à accueillir le câble plat, l'une des zones d'enroulement étant disposée dans la zone du rotor et l'autre dans la zone du stator, une bande (14,22) en matériau isolant qui s'étend en spires étant disposée dans l'espace d'enroulement (R) de la cassette (K) en plus de l'au moins un câble plat (10), laquelle présente dans son tracé au moins deux sections décalées l'une par rapport à l'autre dans le sens périphérique de la cassette (K) avec points d'inversion de sens et zones d'enroulement correspondantes ayant des sens d'enroulement différents, **caractérisé en ce que** dans son tracé la bande (14,22) repose autour de points de retournement disposés sur le stator et/ou le rotor de la cassette (K) depuis lesquels partent respectivement les spires des zones d'enroulement de deux sections différentes de la bande (14, 22) ayant un tracé opposé et elle est fixée par ses extrémités au stator et/ou au rotor.

2. Dispositif selon la revendication 1, **caractérisé en ce que** les deux extrémités de la bande (14, 22) sont fixées au rotor de la cassette (K).

3. Dispositif selon la revendication 1, **caractérisé en ce que** les deux extrémités de la bande (14, 22) sont fixées au stator de la cassette (K).

4. Dispositif selon l'une des revendications 1 à 3, **caractérisé en ce que** la bande (14, 22) possède un nombre pair de section avec points d'inversion de sens et elle est fixée par ses deux extrémités soit au rotor, soit au stator de la cassette (K).
